# EUROPÄISCHE PATENTANMELDUNG

(11) **EP 3 281 710 A1**
(43) Veröffentlichungstag der Anmeldung: **14.02.2018**
(21) Anmeldenummer: 16183649.9
(22) Anmeldetag: 10.08.2016
(51) Int. Cl.: B05D 7/14, B05D 7/00, B05D 1/28, B41J 1/00, B41M 1/00, G02F 1/15, G02F 1/00, G01F 1/00

(54) **COIL-COATING-VERFAHREN UND METALLBAND**

(71) Anmelder: voestalpine Stahl GmbH, 4020 Linz (AT)
(72) Erfinder: SCHATZL-LINDER, Michaela, 4611 Buchkirchen (AT); BRAIDT, Roland, 4202 Hellmonsödt (AT); SELL, Johannes, 4030 Linz (AT); ENSER, Herbert, 4040 Linz (AT); KNOLL, Marcel, 4311 Schwertberg (AT); HILBER, Wolfgang, 4293 Gutau (AT); JAKOBY, Bernhard, 4040 Linz (AT)
(74) Vertreter: Jell, Friedrich

(57) **Zusammenfassung**

Es wird ein endloses Metallband (2) und ein Coil-Coating-Verfahren zur mehrschichtigen Beschichtung dieses endlosen Metallbands (2) gezeigt, bei welchem auf eine Flachseite (6) des Metallbands (2) mithilfe eines Walzenauftrags eine aushärtbare polymere Grundierung (7) zur Ausbildung einer Grundierungsschicht (7.1) und auf diese Grundierungsschicht (7.1) mithilfe eines Walzenauftrags ein aushärtbarer polymerer Lack (8) zur Ausbildung einer Decklackschicht (8.1) aufgebracht und diese Grundierungsschicht (7.1) und Decklackschicht (8.1) gehärtet werden. Um eine elektrochrome Funktionalisierung reproduzierbar zu ermöglichen, wird vorgeschlagen, dass zwischen Grundierungsschicht (7.1) und Decklackschicht (8.1) mindestens ein elektrochromes Element (13, 21) aufgebracht wird, umfassend die Verfahrensschritte Drucken eines, insbesondere elektrisch leitfähigen, elektrochromen Polymers (14) zur Ausbildung einer elektrochromen Schicht (14.1) und/oder Ionenspeicherschicht (14.2) und Vorsehen eines festen Polymerelektrolyten (15) zur Ausbildung einer Elektrolytschicht (15.1), wobei die Elektrolytschicht (15.1) und die elektrochrome Schicht (14.1) oder die Ionenspeicherschicht (14.2) nass-in-nass aufgebracht werden.

## Beschreibung

Die Erfindung betrifft ein endloses Metallband und ein Coil-Coating-Verfahren zur mehrschichtigen Beschichtung eines endlosen Metallbands, bei welchem auf eine Flachseite des Metallbands mithilfe eines Walzenauftrags eine aushärtbare polymere Grundierung zur Ausbildung einer Grundierungsschicht und auf diese Grundierungsschicht mithilfe eines Walzenauftrags ein aushärtbarer polymerer Lack zur Ausbildung einer Decklackschicht aufgebracht und diese Grundierungsschicht und Decklackschicht gehärtet werden.

Eine kontinuierliche Metallbandbeschichtung bzw. Coil-Coating-Verfahren zur mehrschichtigen Beschichtung eines sich im Banddurchlauf befindlichen endlosen Metallbands ist aus dem Stand der Technik bekannt (DE102005061319A1). Bei solchen Verfahren wird an einer Flachseite des Metallbands meist eine Konversionsschicht erzeugt, nachfolgend auf diese Flachseite mithilfe eines Walzenauftrags eine aushärtbare polymere Grundierung zur Ausbildung einer Grundierungsschicht und auf diese Grundierungsschicht mithilfe eines Walzenauftrags ein aushärtbarer polymerer Lack zur Ausbildung einer Lackschicht aufgebracht und ausgehärtet. Derartige bekannte Verfahren können auch zur Funktionalisierung von Metallbändern dienen

Zur elektrischen Funktionalisierung eines Metallbands im Coil-Coating-Verfahren ist es aus der EP2605280A1 bekannt, zwischen einer elektrisch isolierenden Grundierung auf dem Metallband und einer Decklackschicht auf der Grundierung zwei endlose elektrische Leiterbahnen sowie mit diesen kontaktierte photovoltaische Zellen vorzusehen. Grundierung und Decklacksicht werden mithilfe eines Walzenauftrags aufgetragen.

Ausgehend vom eingangs geschilderten Stand der Technik hat sich die Erfindung die Aufgabe gestellt, ein Coil-Coating-Verfahren zu schaffen, das reproduzierbar eine standfeste elektrochrome Funktionalisierung eines Metallbands mit verbesserten elektrochromen und mechanischen Eigenschaften sicherstellen kann. Zudem soll das Coil-Coating-Verfahren besonders einfach und daher kostengünstig anwendbar sein.

Die Erfindung löst die gestellte Aufgabe dadurch, dass zwischen Grundierungsschicht und Decklackschicht mindestens ein elektrochromes Element aufgebracht wird, umfassend die Verfahrensschritte Drucken eines, insbesondere elektrisch leitfähigen, elektrochromen Polymers zur Ausbildung einer elektrochromen Schicht und/oder Ionenspeicherschicht und Vorsehen eines festen Polymerelektrolyten zur Ausbildung einer Elektrolytschicht, wobei die Elektrolytschicht und die elektrochrome Schicht oder die Ionenspeicherschicht nass-in-nass aufgebracht werden.

Wird zwischen Grundierungsschicht und Lackschicht mindestens ein elektrochromes Element aufgebracht, kann dem Metallband bereits mit einem Coil-Coating Verfahren eine elektrochrome Funktionalität gegeben werden, wenn dieses Aufbringen die Verfahrensschritte Drucken eines, insbesondere elektrisch leitfähigen, elektrochromen Polymers zur Ausbildung einer elektrochromen Schicht und/oder Ionenspeicherschicht und Vorsehen eines festen Polymerelektrolyten zur Ausbildung einer Elektrolytschicht umfasst. Das Aufbringen dieser Schichten bedarf beim Coil-Coating Verfahren besonderer Sorgfalt, um mit vergleichsweise hoher Reproduzierbarkeit die gewünschten elektrochromen Eigenschaften am elektrochromen Element sicherstellen zu können.
Um diese Reproduzierbarkeit zu ermöglichen, schlägt die Erfindung vor, dass die Elektrolytschicht und die elektrochrome Schicht und/oder die Ionenspeicherschicht nass-in-nass aufgebracht werden. Damit kann beispielsweise gewährleistet werden, die Elektrolytschicht an einer unausgehärteten elektrochromen Schicht oder unausgehärteten Ionenspeicherschicht bzw. die elektrochrome Schicht oder Ionenspeicherschicht an der unausgehärteten Elektrolytschicht vorzusehen - wodurch sich diese Schichten an der Fügefläche verbessert verbinden können. Ein elektrochromes Element mit vergleichsweise hoher mechanischer Belastbarkeit kann damit reproduzierbar hergestellt werden. Zudem können durch das Nass-in-nass-Aufbringen eventuelle Unebenheiten an der Grenzfläche zwischen den Schichten geglättet werden - lokale Spannungsspitzen durch Unebenheiten an der Grenzfläche sind somit einfach vermeidbar. Die Degradation der Schichten kann auf diese Weise verlangsamt werden, was die reproduzierbare Herstellung eines elektrochromen Elements mit vergleichsweise großer Zahl von Schaltzyklen ohne nennenswerten Abfall der elektrochromen Eigenschaften ermöglichen kann. Zudem kann solch eine durch das nass-in-nass Aufbringen entstehende glatte Grenzfläche reproduzierbar ein elektrochromes Element sowohl mit homogenem Kontrast als auch mit homogenem Umschaltverhalten zulassen.

Im Allgemeinen wird erwähnt, dass das Metallband aus Eisen oder Aluminium bzw. aus deren Legierungen bestehen kann. Dieses Metallband kann unbeschichtet oder beschichten - z. B. organisch/metallisch, verzinkt oder legierungsverzinkt - sein. Auch kann dieses Metallband ein verzinktes oder legierungsverzinktes Stahlband sein. Im Allgemeinen wird weiter erwähnt, dass vorgesehen sein kann, die jeweiligen Schichten derart nass-in-nass aufzubringen, dass dabei ein Fließen der beiden Schichten zumindest an ihren gemeinsamen Grenzfläche zugelassen wird. Dies bedeutet, dass auf eine nicht vollständig getrocknete, also eventuell zwischengetrocknete/abgelüftete, bzw. noch nicht vollständig ausgehärtete / unausgehärtete Schicht eine andere nasse Schicht trifft, um damit ein "nass-in-nass"-Aufragen zu ermöglichen.

Das Verfahren kann weiter vereinfacht werden, wenn zur Ausbildung der elektrochromen Schicht und der Ionenspeicherschicht jeweils ein elektrochromes Polymer gedruckt werden.

Ein vertikal aufgebautes elektrochromes Element kann besonders einfach hergestellt werden, wenn die Ionenspeicherschicht, die Elektrolytschicht und die die elektrochrome Schicht übereinander aufgebracht werden. Als besonders vorteilhaft kann sich zeigen, diese Schichten hierzu zu drucken. Im Allgemeinen wird erwähnt, dass eine verbesserte elektrochrome Funktionalität am elektrochromen Element erreicht werden kann, wenn - vom Metallband aus gesehen - auf die Ionenspeicherschicht die Elektrolytschicht und auf die Elektrolytschicht die elektrochrome Schicht aufgebracht, insbesondere gedruckt, werden.

Zu einem einfachen Fertigungsprozess im Coil-Coating-Verfahren kann beitragen, wenn der feste Polymerelektrolyt gedruckt wird. Vorzugsweise kann hierzu ein Rolle-zu-Rolle-Verfahren Anwendung finden, um hohe Bandgeschwindigkeiten sicherstellen zu können.

Wird das elektrochrome Polymer mit mindestens einem Lösungsmittel aufgetragen, kann selbst bei vergleichsweise schnellen Bandlaufgeschwindigkeiten eine ausreichend feuchte Polymermasse für einen nass-in-nass Auftrag im Coil-Coating Verfahren sichergestellt werden. Verfahrenstechnisch einfach gelöst, kann zu diesem Zweck H₂O als Lösungsmittel verwendet werden.

Vorstehend Erwähntes kann auch bei einem festen Polymerelektrolyt ermöglicht werden, wenn dieser feste Polymerelektrolyt mit mindestens einem Lösungsmittel, insbesondere Tetrahydrofuran, aufgetragen wird. Auch NMP (N-Methyl-2-pyrrolidon) kann sich diesbezüglich auszeichnen.

Der Fertigungsprozess zum elektrochromen Element kann im Coil-Coating-Verfahren weiter verbessert werden, wenn die elektrochrome Schicht und/oder Ionenspeicherschicht und/oder die Elektrolytschicht aktiv vorgehärtet werden, bevor die jeweils andere Schicht des elektrochromen Elements aufgebracht wird. Dies kann insbesondere ein Druckverfahren mit einem Rolle-zu-Rolle-Auftrag erleichtern - und damit die Reproduzierbarkeit des Verfahrens weiter erhöhen.

Das Aufdrucken einer nassen Schicht kann insbesondere dann reproduzierbar sichergestellt werden, wenn bis zu einer Viskosität im Bereich von 30 bis 125 Sekunden [s], gemessen im DIN-Becher 4 gemäß DIN 53211 bei 20°C (Grad Celsius), vorgehärtet wird.

Ein besonders einfach herzustellendes elektrochromes Element mit hervorragenden elektrochromen Eigenschaften kann geschaffen werden, wenn das elektrisch leitfähige, elektrochrome Polymer PEDOT:PSS [poly(3,4-ethylenedioxythiophene) polystyrene sulfonate] aufweist.

Die Applikation des Polymerelektrolyts im Coil-Coating Verfahren kann weiter erleichtert werden, wenn der feste Polymerelektrolyt als Elektrolytträger PVDF-HFP [poly(vinylidenefluorid-hexafluoropropylen)] oder PVC-PMMA [poly(vinylchlorid)-poly(methylmethacrylat)] aufweist.

Weist der feste Polymerelektrolyt als Elektrolytsalz ein Alkalimetallsalz, insbesondere LiCF3SO3 [Lithiumtrifluoromethansulfonat], auf, kann dies die Reproduzierbarkeit des Verfahrens zusätzlich erhöhen.

Das gedruckte elektrochrome Polymer kann zu einer Schichtdicke von 50 nm bis 1 µm, vorzugsweise 200 bis 500 nm, und insbesondere 200 nm bis 600 nm führen, um die elektrochrome Funktionalisierung des Metallbands zu verbessern.

Es ist zudem Aufgabe der Erfindung, ein endloses Metallband mit einem elektrochromen Element zu schaffen, das eine hohe mechanische und elektrochrome Eigenschaften aufweist.

Die Erfindung löst diese gestellte Aufgabe durch ein endloses Metallband mit einer Grundierungsschicht, mit einer Decklackschicht und mit einem zwischen Grundierungsschicht und Decklackschicht vorgesehenen elektrochromen Element, das eine erste Elektrode, eine elektrochrome Schicht, eine feste Elektrolytschicht, eine Ionenspeicherschicht und eine zweite Elektrode aufweist, wobei ein erstes elektrisch leitfähiges, elektrochromes Polymer sowohl die erste Elektrode als auch die elektrochrome Schicht und ein zweites elektrisch leitfähiges, elektrochromes Polymer sowohl die Ionenspeicherschicht als auch die zweite Elektrode ausbildet.

Indem die Elektrolytschicht und die elektrochrome Schicht und/oder die Ionenspeicherschicht des elektrochromen Elements nass-in-nass aufgebracht werden, kann nicht nur die mechanische Festigkeit der Schichten an der gemeinsamen Fügefläche verbessert, sondern auch vorteilhaft die Grenzfläche zwischen diesen Schichten geglättet werden, was die elektrochromen Eigenschaften des elektrochromen Elements verbessert. So ist mit einer verminderten Degradation der Schichten und damit einer erhöhten Lebensdauer des elektrochromen Elements als auch mit einem homogeneren Kontrast und einem homogenen Umschaltverhalten zu rechnen. Eine mechanisch besonders standfeste bzw. eine verbesserte elektrochrome Funktionalisierung eines Metallbands kann damit ermöglicht werden.
Im Allgemeinen wird erwähnt, dass die Elektrolytschicht und die elektrochrome Schicht und/oder die Ionenspeicherschicht beispielsweise über eine sich durch ein Nass-in-nass-Aufbringen dieser Schichten zwischen diesen ausbildenden, geglätteten Grenzfläche anschließen können.

Die mechanische Standfestigkeit und die elektrochrome Funktionalisierung können weiter verbessert werden, wenn das elektrisch leitfähige, elektrochrome Polymer PEDOT:PSS aufweist und/oder der feste Polymerelektrolyt als Elektrolytträger PVDF-HFP oder PVC-PMMA aufweist. Hierzu kann beitragen, wenn der feste Polymerelektrolyt als Elektrolytsalz ein Alkalimetallsatz, insbesondere LiCF₃SO₃, aufweist.

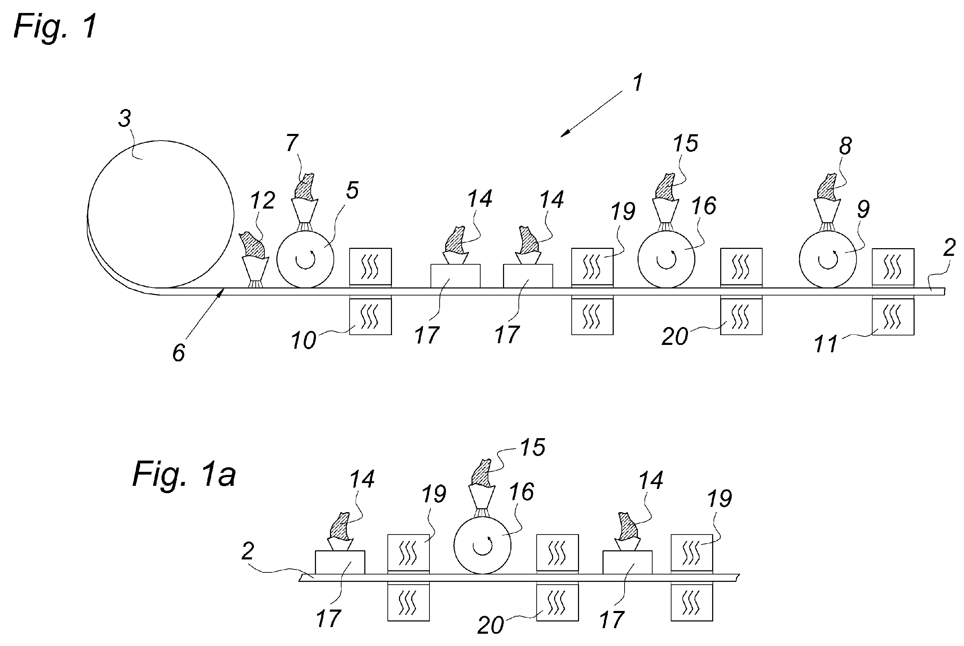

In den Figuren ist beispielsweise der Erfindungsgegenstand anhand mehrerer Ausführungsvarianten näher dargestellt. Es zeigen
- Fig. 1: eine schematische Ansicht auf eine Vorrichtung für ein Coil-Coating-Verfahren,
- Fig. 1 a: eine alternative Ausbildung der nach Fig. 1 dargestellten Vorrichtung,
- Fig. 2: eine ab- und aufgerissene Draufsicht auf ein endloses Metallband nach einem ersten Ausführungsbeispiel - hergestellt nach dem nach Fig. 1 dargestellten Coil-Coating-Verfahren,
- Fig. 3: eine Schnittansicht nach III-III der Fig. 2 und
- Fig. 4: eine Schnittansicht eines anderen endloses Metallbands nach einem zweiten Ausführungsbeispiel.

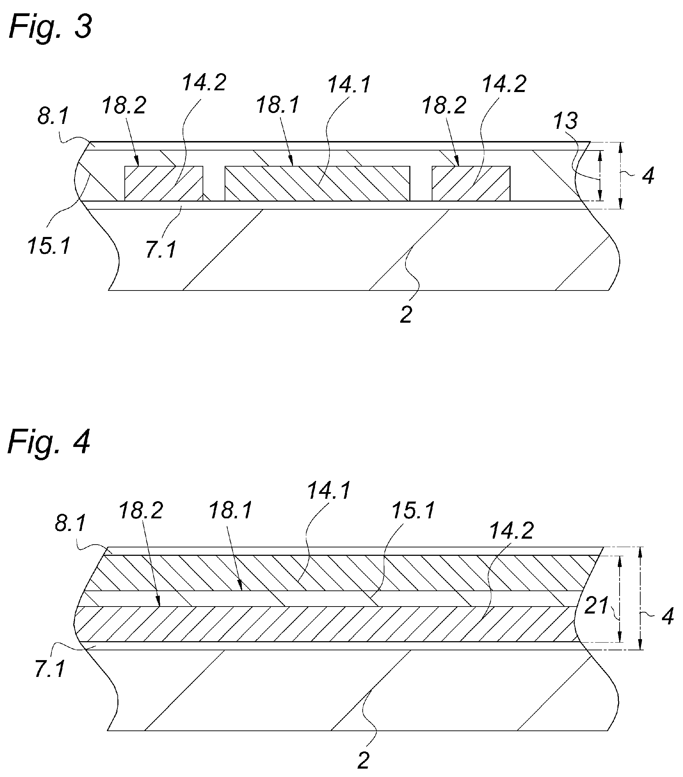

Gemäß Fig. 1 wird eine Vorrichtung 1 zur Durchführung des erfindungsgemäßen Coil-Coating-Verfahrens gezeigt, bei welchem ein endloses Metallband 2, beispielsweise ein Stahlband (verzinkt/unverzinkt), von einem Coil 3 abgewickelt und im Banddurchlauf kontinuierlich mit einer mehrschichtigen Beschichtung 4 (siehe hierzu die Figuren 3) versehen wird.

Mithilfe einer Walze 5 eines nicht dargestellten Coaters, wird auf eine Flachseite 6 des Metallbands 2 eine aushärtbare polymere Grundierung 7 bzw. Primer aufgebracht, um auf dieser Flachseite 6 eine Grundierungsschicht 7.1 zu erzeugen. Die Grundierung 7 kann beispielsweise eine Polyesterbasis aufweisen. Damit wird bekanntermaßen die Haftfestigkeit am und/oder der Korrosionsschutz des Metallbands 2 erhöht.

Auf die Grundierungsschicht 7.1 auf der Flachseite 6 des Metallbands 2 wird in weiterer Folge ein aushärtbarer polymerer Lack 8, der beispielsweise ebenso eine Polyesterbasis aufweist, zur Ausbildung einer Decklackschicht 8.1 aufgebracht. Dieses Aufbringen erfolgt - gleichwie beim Grundierungsauftrag dargestellt - mithilfe einer Walze 9 eines nicht dargestellten Coaters. Die aufgetragene Grundierung 7 und der aufgetragene Lack 8 werden jeweils durch einen Trockner 10, 11 gehärtet und/oder durch chemisches Vernetzen gehärtet.

Vor dem Aufbringen der Grundierungsschicht 7.1 auf der oberen Flachseite 6 des Metallbands 2, ist es vorstellbar, dass ein Sol-Gel 12 aufgesprüht wird, um eine Konversionssicht zu erzeugen.

Erfindungsgemäße wird das Metallband 2 elektrochrom funktionalisiert. Hierzu wird im Coil-Coating-Verfahren zwischen Grundierungsschicht 7.1 und Decklackschicht 8.1 ein elektrochromes Element 13 appliziert - und zwar wird ein elektrisch leitfähiges, elektrochromes Polymer 14 und ein festes Polymerelektrolyt 15 im Coil-Coating-Verfahren aufgetragen.
Hierbei wird das elektrisch leitfähige, elektrochrome Polymer 14 mit einem Drucker 17 aufgedruckt (z.B.: durch Digitaldruck, Siebdruck, Tiefdruck etc.). Das elektrisch leitfähige, elektrochrome Polymer 14 bildet auf dem Metallband 2 eine elektrochromen Schicht 14.1 oder Ionenspeicherschicht 14.2 aus, je mit einer Schichtdicke von 400 nm. Ebenso wird der feste Polymerelektrolyt 15 im Coil-Coating-Verfahren auf das Metallband 2 gedruckt - und zwar mithilfe eines nicht dargestellten Coaters, der mit einer Walze 16 über ein Rolle-zu-Rolle-Verfahren ("Roll-to-Roll") auf dem Metallband 2 eine Elektrolytschicht 15.1 erzeugt.

Das elektrisch leitfähige, elektrochrome Polymer 14 weist PEDOT:PSS [poly(3,4-ethylenedioxythiophene) polystyrene sulfonate] und gegebenenfalls auch ein Lösungsmittel (z.B.: H₂O und/oder Isopropanolbasis) auf. Die Druckbarkeit solch eines elektrisch leitfähigen, elektrochromen Polymers 14 kann verbessert werden, wenn PEDOT:PSS als wässrige und/oder Isopropanol-basierte Dispersion aufgetragen wird.

Der feste Polymerelektrolyt 15 wird aus einer Mischung von PVC-PMMA [poly(vinylchlorid)-poly(methylmethacrylat)] als Elektrolytträger und LiCF₃SO₃ [Lithium-trifluoromethansulfonat] als Elektrolytsalz mit 18 Gewichtsprozent PVC, 42 Gewichtsprozent PMMA und 40 Gewichtsprozent LiCF₃SO₃ hergestellt. Diese Mischung wird mit einem Verhältnis von 1 zu 9 in THF (Tetrahydrofuran) gelöst.

Als festes Polymerelektrolyt 15 ist außerdem eine Mischung von PVDF-HFP [poly(vinylidenefluorid-hexafluoropropylen)] als Elektrolytträger und LiCF₃SO₃ [Lithium-trifluoromethansulfonat] als Elektrolytsalz mit 77 Gewichtsprozent Elektrolytträger und 23 Gewichtsprozent Elektrolytsalz vorstellbar. Diese Mischung mit 1,3 g kann in 6g in NMP (N-Methyl-2-pyrrolidon) gelöst sein. Der aufgebrachte feste Polymer-elektrolyt 15 führt zu einer Schichtdicke im Bereich zwischen 2,7 und 13,5 µm.

Hervorragende elektrochrome und mechanische Eigenschaften am elektrochromen Element 13 werden dadurch sicherstellt, dass die Elektrolytschicht 15.1 und die elektrochrome Schicht 14.1 oder die Ionenspeicherschicht 14.2 nass-in-nass aufgebracht werden. Um dies zu erreichen, ist eine dieser Schichten 14.1, 14.2 oder 15.1 noch feucht bzw. nass und damit nicht vollständig gehärtet - auf welche die jeweils andere nasse Schicht 14.1, 14.2 oder 15.1 appliziert wird. Auf diese Weise kann ein Fließen zumindest jener Schichten, auf welche nass aufgebracht wird, ermöglicht werden, wodurch eventuelle Unebenheiten geglättet und eine glatte Grenzfläche 18.1 bzw. 18.2 zwischen den betreffenden Schichten 14.1, 14.2 oder 15.1 sichergestellt wird. Dies reduziert die Degradation am elektrochromen Element 13, wodurch sich eine vergleichsweise große Zahl von Schaltzyklen ohne nennenswerten Abfall der elektrochromen Eigenschaften ergibt. Auch können damit am elektrochromen Element 13 ein homogener Kontrast und ein homogenes Umschaltverhalten ermöglicht werden - wobei diese Art des stoffschlüssigen Fügens an der Grenzfläche 18.1 bzw. 18.2 bzw. damit auch der Fügefläche eine hohe Haftfestigkeit gewährleistet und zu einer hohen Standfestigkeit am elektrochromen Element 13 führt.

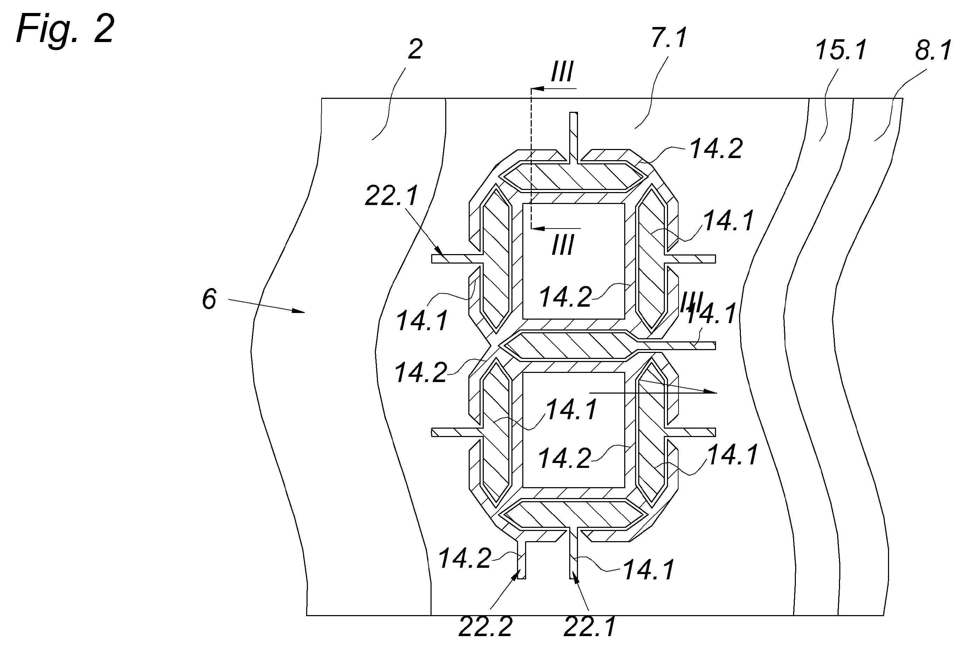

Wie insbesondere in Fig. 1 zu erkennen, wird je ein elektrochromes Polymer 14 für die elektrochromen Schicht 14.1 und der Ionenspeicherschicht 14.2 gedruckt. Hierbei ist vorstellbar, dass zum Drucken der beiden Sichten 14.1, 14.2 nur ein Drucker 17 verwendet wird. Da das elektrochrome Polymer 14 auch elektrisch leitend ist, bilden die elektrochrome Schicht 14.1 und die Ionenspeicherschicht 14.2 auch gleichzeitig die Elektroden bzw. die erste Elektrode 22.1 und zweite Elektrode 22.2 des elektrochromen Elements 13 aus - wie dies in Fig. 2 zu erkennen ist.

Der Fig. 3 ist zu entnehmen, dass die elektrochrome Schicht 14.1 und die Ionenspeicherschicht 14.2 nebeneinander auf dem Metallband 2 vorgesehen sind. Die Elektrolytschicht 15.1 wird auf diese beiden Schichten 14.1, 14.2 nass appliziert, wobei dabei die elektrochrome Schicht 14.1 und die Ionenspeicherschicht 14.2 noch nass sind, um an beiden Grenzschichten 18.1, 18.2 bzw. Fügeflächen die erfindungsgemäßen Vorteile gewährleisten zu können.

Der feste Polymerelektrolyt 15 weist ebenso ein Lösungsmittel, nämlich Tetrahydrofuran, auf.

Elektrochrome Schicht 14.1, Ionenspeicherschicht 14.2 und feste Elektrolytschicht 15.1 können vorgehärtet werden, wie dies durch die Trockner 19, 20 in den Figuren 1 und 1a angedeutet ist.
Das Vorhärten der elektrochromen Schicht 14.1 und/oder Ionenspeicherschicht 14.2 kann das Aufbringen/Drucken der Elektrolytschicht 15.1 erleichtern (vgl. Fig. 1).
Zudem kann ein Vorhärten der Elektrolytschicht 15.1 das Aufbringen/Drucken der elektrochrome Schicht 14.1 oder Ionenspeicherschicht 14.2 erleichtern (vgl. Fig. 1a).

Die Schicht 14.1, 14.2 bzw. 15.1 wird vor dem nassen Aufbringen der jeweils anderen Schicht 14.1, 14.2 bzw. 15.1 derart vorgehärtet, dass diese vorgehärtete Schicht eine im DIN-Becher 4 gemäß DIN 53211 gemessene Viskosität im Bereich von 30 bis 125 Sekunden [s] bei 20°C aufweist. Auf diese Weise kann reproduzierbar ein Nass-in-nass-Aufbringen der jeweiligen Schichten gewährleistet - und ganz besonders der Einfluss der Grenzfläche zwischen den nass-in-nass aufgebrachten Schichten weiter optimiert werden. Zudem ist es damit möglich, ein nasses Aufdrucken der jeweiligen anderen Schicht (elektrochrome Schicht 14.1, Ionenspeicherschicht 14.2 und feste Elektrolytschicht 15.1) reproduzierbar zu ermöglichen.

In der Fig. 4 ist eine alternative Ausführung eines elektrochromen Elements 21 geoffenbart: Dieses elektrochrome Element 21 wird mit einer Vorrichtung 1 auf das Metallband 2 appliziert, welche Vorrichtung 1 in der elektrochromen Funktionalisierung entsprechend Fig. 1a konstruktiv verändert ist. Zum Unterschied zur nach Fig. 1 dargestellten elektrochromen Funktionalisierung erfolgt gemäß Fig. 1a der Auftrag der Elektrolytschicht 15.1 im Banddurchlauf zwischen dem Auftrag der Ionenspeicherschicht 14.2 und der elektrochrome Schicht 14.1.
Durch diese konstruktive Änderung an der Vorrichtung bzw. durch diese Verfahrensänderung kann das elektrochrome Element 21 nach Fig. 4 vertikal hergestellt werden. Dieser vertikale Aufbau des elektrochromen Elements 21 ist in Fig. 4 daran zu erkennen, dass vom Metallband 2 aus gesehen auf die Ionenspeicherschicht 14.2 die Elektrolytschicht 15.1 und auf die Elektrolytschicht 15.1 die elektrochrome Schicht 14.1 aufgebracht bzw. gedruckt wird.
Vorzugsweise werden sowohl Ionenspeicherschicht 14.2 als auch die Elektrolytschicht 15.1 sowie die Elektrolytschicht 15.1 und die elektrochrome Schicht 14.1 nass-in-nass aufgebracht bzw. gedruckt.

## Patentansprüche

1. Coil-Coating-Verfahren zur mehrschichtigen Beschichtung eines endlosen Metallbands (2), bei welchem
auf eine Flachseite (6) des Metallbands (2) mithilfe eines Walzenauftrags eine aushärtbare polymere Grundierung (7) zur Ausbildung einer Grundierungsschicht (7.1) und
auf diese Grundierungsschicht (7.1) mithilfe eines Walzenauftrags ein aushärtbarer polymerer Lack (8) zur Ausbildung einer Decklackschicht (8.1) aufgebracht und diese Grundierungsschicht (7.1) und Decklackschicht (8.1) gehärtet werden,
**dadurch gekennzeichnet, dass**
zwischen Grundierungsschicht (7.1) und Decklackschicht (8.1) mindestens ein elektrochromes Element (13, 21) aufgebracht wird, umfassend die Verfahrensschritte
Drucken eines, insbesondere elektrisch leitfähigen, elektrochromen Polymers (14) zur Ausbildung einer elektrochromen Schicht (14.1) und/oder Ionenspeicherschicht (14.2) und
Vorsehen eines festen Polymerelektrolyten (15) zur Ausbildung einer Elektrolytschicht (15.1), wobei die Elektrolytschicht (15.1) und die elektrochrome Schicht (14.1) oder die Ionenspeicherschicht (14.2) nass-in-nass aufgebracht werden.

2. Coil-Coating-Verfahren nach Anspruch 1, **dadurch gekennzeichnet, dass** zur Ausbildung der elektrochromen Schicht (14.1) und der Ionenspeicherschicht (14.2) jeweils ein elektrochromes Polymer (14) gedruckt werden.

3. Coil-Coating-Verfahren nach Anspruch 1 oder 2, **dadurch gekennzeichnet, dass** die Ionenspeicherschicht (14.2), die Elektrolytschicht (15.1) und die die elektrochrome Schicht (14.1) übereinander aufgebracht, insbesondere gedruckt, werden.

4. Coil-Coating-Verfahren nach Anspruch 1, 2 oder 3, **dadurch gekennzeichnet, dass** der feste Polymerelektrolyt (15), insbesondere mithilfe eines Rolle-zu-Rolle-Verfahrens, gedruckt wird.

5. Coil-Coating-Verfahren nach einem der Ansprüche 1 bis 4, **dadurch gekennzeichnet, dass** das elektrochrome Polymer (14) mit mindestens einem Lösungsmittel, insbesondere H₂O, aufgetragen wird.

6. Coil-Coating-Verfahren nach einem der Ansprüche 1 bis 5, **dadurch gekennzeichnet, dass** der feste Polymerelektrolyt (15) mit mindestens einem Lösungsmittel, insbesondere THF (Tetrahydrofuran) oder NMP (N-Methyl-2-pyrrolidon), aufgetragen wird.

7. Coil-Coating-Verfahren nach Anspruch 5 oder 6, **dadurch gekennzeichnet, dass** die elektrochrome Schicht (14.1) und/oder Ionenspeicherschicht (14.2) und/oder die Elektrolytschicht (15.1) aktiv vorgehärtet werden, bevor die jeweils andere Schicht des elektrochromen Elements (13, 21) aufgebracht wird.

8. Coil-Coating-Verfahren nach Anspruch 7, **dadurch gekennzeichnet, dass** bis zu einer Viskosität im Bereich von 30 bis 125 Sekunden [s], gemessen im DIN-Becher 4 gemäß DIN 53211, vorgehärtet wird.

9. Coil-Coating-Verfahren nach einem der Ansprüche 1 bis 8, **dadurch gekennzeichnet, dass** das elektrisch leitfähige, elektrochrome Polymer (14) PEDOT:PSS aufweist.

10. Coil-Coating-Verfahren nach einem der Ansprüche 1 bis 9, **dadurch gekennzeichnet, dass** der feste Polymerelektrolyt (15) als Elektrolytträger PVDF-HFP oder PVC-PMMA aufweist.

11. Coil-Coating-Verfahren nach Anspruch 10, **dadurch gekennzeichnet, dass** der feste Polymerelektrolyt (15) als Elektrolytsalz ein Alkalimetallsatz, insbesondere LiCF₃SO₃, aufweist.

12. Coil-Coating-Verfahren nach einem der Ansprüche 1 bis 11, **dadurch gekennzeichnet, dass** das gedruckte elektrochrome Polymer (14) zu einer Schichtdicke von 50 nm bis 1 µm, vorzugsweise 200 bis 500 nm, und insbesondere 200 nm bis 600 nm führt.

13. Endloses Metallband, hergestellt durch ein Verfahren nach einem der Ansprüche 1 bis 12 mit einer Grundierungsschicht (7.1), mit einer Decklackschicht (8.1) und mit einem zwischen Grundierungsschicht (7.1) und Decklackschicht (8.1) vorgesehenen elektrochromen Element (13, 21), das eine erste Elektrode (22.1), eine elektrochrome Schicht (14.1), eine feste Elektrolytschicht (15.1), eine Ionenspeicherschicht (14.2) und eine zweite Elektrode (22.2) aufweist, wobei ein erstes elektrisch leitfähiges, elektrochromes Polymer (14) sowohl die erste Elektrode (22.1) als auch die elektrochrome Schicht (14.1) und ein zweites elektrisch leitfähiges, elektrochromes Polymer (14) sowohl die Ionenspeicherschicht (14.2) als auch die zweite Elektrode (22.2) ausbildet.

14. Endloses Metallband nach Anspruch 13, **dadurch gekennzeichnet, dass** das elektrisch leitfähige, elektrochrome Polymer (14) PEDOT:PSS aufweist.

15. Endloses Metallband nach Anspruch 13 oder 14, **dadurch gekennzeichnet, dass** der feste Polymerelektrolyt (15) als Elektrolytträger PVDF-HFP oder PVC-PMMA aufweist.

16. Endloses Metallband nach Anspruch 15, **dadurch gekennzeichnet, dass** der feste Polymerelektrolyt (15) als Elektrolytsalz ein Alkalimetallsatz, insbesondere LiCF₃SO₃, aufweist.
